# EUROPEAN PATENT SPECIFICATION

(11) **EP 1 510 721 B1**
(45) Date of publication and mention of the grant of the patent: **30.06.2010**
(21) Application number: 03736065.8
(22) Date of filing: 06.06.2003
(51) Int. Cl.: F16F 15/03, F16F 7/00, F16F 6/00

(54) **ELECTROMAGNETIC SHOCK ABSORBER**
ELEKTROMAGNETISCHER DÄMPFER
AMORTISSEUR ELECTROMAGNETIQUE

(30) Priority: 06.06.2002 JP 2002165782; 10.06.2002 JP 2002168135
(43) Date of publication of application: 02.03.2005
(73) Proprietor: KAYABA INDUSTRY CO., LTD., Minato-Ku, Tokyo 105-6190 (JP); The Foundation for the Promotion of Industrial Science, Meguro-ku, Tokyo 153-0041 (JP)
(72) Inventor: KONDO, Takuhiro c/o KAYABA INDUSTRY CO., LTD., Minato-ku, Tokyo 105-6190 (JP); MATSUMAE, Taro c/o KAYABA INDUSTRY CO., LTD., Minato-ku, Tokyo 105-6190 (JP); SUDA, Yoshihiro, Oota-ku, Tokyo 145-0071 (JP)
(74) Representative: Grünecker, Kinkeldey, Stockmair & Schwanhäusser Anwaltssozietät
(86) International application number: PCT/JP2003/007180
(87) International publication number: WO 2003/104679

(56) References cited:
- JP-A- 10 089 406
- JP-A- 58 109 745
- JP-A- 62 004 937
- JP-A- 2001 334 982
- JP-A- 2003 042 224
- JP-A- 2003 104 025
- JP-A- 2003 223 220
- JP-A- 2003 227 543
- JP-U- 3 023 234
- US-A- 5 070 284
- US-A- 5 775 469

## Description

### TECHNICAL FIELD

The present invention relates to an electromagnetic shock absorber, which converts telescopic motion of a shock absorber body into rotary motion of a motor utilizing a ball screw mechanism and damns vibration utilizing electromagnetic resistance generated by the motor, according to the preamble of claim 1. Such a device is known from US 5,070,284.

### BACKGROUND ART

A suspension unit for a vehicle in which a hydraulic shock absorber is arranged, in parallel with a suspension spring, between a car body and an axle is widely known.

Further, Japanese Patent Laid-Open Publication No. 5-44758A has disclosed a suspension unit in which magnet coils are built in a part of a hydraulic shock absorber. In this suspension unit, coils are attached to a cylinder of the hydraulic shock absorber and magnets are attached to a piston rod, respectively, and an electric current is applied to the coils, thereby generating driving force (electromagnetic force) along the direction of a stroke of the piston rod so as to control the quantity of telescopic motion of the suspension unit according to the traveling condition of a vehicle.

However, in such a suspension unit in which magnet coils are built in a hydraulic shock absorber, a hydraulic pressure, a power source, and the like are required, whereby it is complicated in structure and it is disadvantageous in respect of the costs.

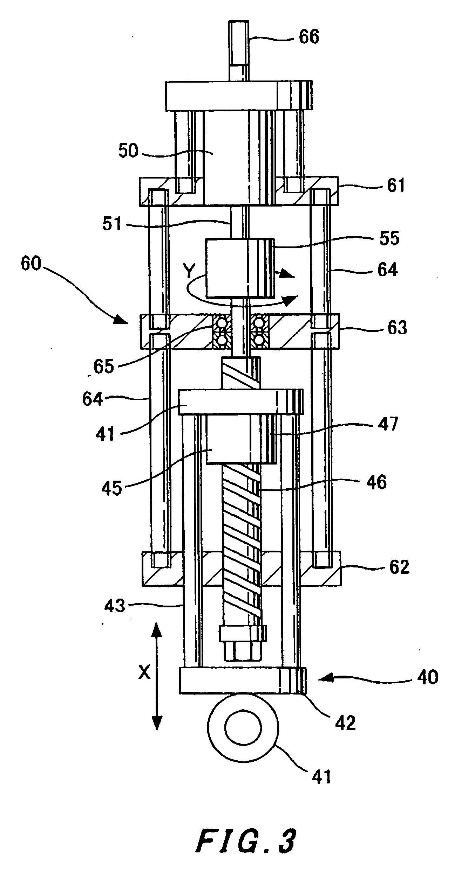

On the other hand, a new electromagnetic shock absorber which does not require a hydraulic pressure, an air pressure, a power source, or the like is under study. Such an electromagnetic shock absorber is basically constituted as shown in an exemplified model of FIG. 3.

In this electromagnetic shock absorber, telescopic motion of the shock absorber is converted into rotary motion utilizing a ball screw mechanism and a motor is driven due to the rotary motion, and the telescopic motion of the shock absorber is damped by resistance generated at this time resulting from electromagnetic force.

A motor 50 is supported by a supporting frame 60, and there is provided a traveling frame 40 which is guided in such a manner that the traveling frame 40 can freely slide with respect to the supporting frame 60. Between a screw shaft 46 and a ball nut 47 which constitute a ball screw mechanism 45, the ball nut 47 is attached to the above-mentioned traveling frame 40, and the screw shaft 46 to be spirally engaged with the ball nut 47 is coaxially connected with a rotary shaft 51 of the above-mentioned motor 50 through a coupling 55.

The supporting frame 60 has an upper bracket 61, a lower bracket 62, and an intermediate bracket 63 which is located between the upper bracket 61 and the lower bracket 62. The supporting frame 60 is constituted in such a manner that these brackets are connected with each other by means of a plurality of connecting rods 64. The above-mentioned screw shaft 46 is rotatably supported, by a bearing 65 installed at the intermediate bracket 63, in such a manner that the screw shaft 46 goes through the bearing 65.

The above-mentioned traveling frame 40 has an upper bracket 41, a lower bracket 42, and a plurality of guide rods 43 which connect these brackets 41 and 42. The guide rods 43 of the traveling frame 40 slidably go through the lower bracket 32 of the above-mentioned supporting frame 30, whereby the guide rods 43 guide the traveling frame 40 in such a manner that the traveling frame 40 can slide in parallel with the screw shaft 46.

The above-mentioned ball nut 47 is attached to the upper bracket 41, and a large number of balls are arranged along a thread groove inside the ball nut 47 although these balls are not shown in the drawing. The above-mentioned screw shaft 46 is spirally engaged with the ball nut 47 through the above-mentioned large number of balls.

When the ball nut 47 together with the traveling frame 40 moves along the screw shaft 46, rotary motion is applied to the screw shaft 46 by the ball screw mechanism 45.

If the electromagnetic shock absorber is interposed between a car body and an axle, for example, and is utilized as a suspension of the car, a mounting bracket 66 of the supporting frame 60 which is located above the motor 50 and at an upper end of the electromagnetic shock absorber will be connected on the side of the car body, and a mounting eye 44 which is provided at the lower bracket 42 of the traveling frame 40 at a lower end of the electromagnetic shock absorber will be connected on the axle side.

When vibration inputs into the electromagnetic shock absorber from the surface of a road and the ball nut 47 makes linear motion in the direction of an arrow X together with the traveling frame 40, the screw shaft 46 makes rotary motion at the position due to spiral engagement of the thread groove of the screw shaft 46 and the balls which are arranged along the thread groove inside the ball nut 47.

The rotary motion of the screw shaft 46 is transmitted, as rotary motion of a rotary shaft 51 in the direction of an arrow Y, through the coupling 55 attached to an upper end of the screw shaft 46, thereby rotating the motor 50.

In the motor 50, for example permanent magnets are arranged at a rotor of the motor 50, and coils of a stator of the respective magnetic poles short-circuit directly to each other or the coils are connected via a control circuit so that desired electromagnetic force can be obtained. With the progress of rotations of the rotor of the motor 50, electric currents flow through the coils due to induced electromotive force. At this time, the electromagnetic force which arises resulting from the flow of electric currents becomes torque to oppose against the rotations of the rotary shaft 51 of the motor 50.

Additionally, it is possible to freely change the strength of torque which is based on the electromagnetic force and opposes against the direction of rotations of the rotary shaft 51 by changing the strength of resistance in the control circuit which is connected with the coils.

Electromagnetic torque which becomes resistance against the rotations of the rotary shaft 51 restrains the rotations of the above-mentioned screw shaft 46. The torque operates as resistance to restrain linear motion of the ball nut 47 of the ball screw mechanism 45, that is, as damping force against the vibration which puts into the electromagnetic shock absorber.

However, it is feared that the following problems may arise if the electromagnetic shock absorber which generates electromagnetic resistance by converting telescopic motion of the shock absorber body into rotary motion of the motor 50 by the ball screw mechanism as described above is actually applied to a vehicle.

In the electromagnetic shock absorber, the motor 50, the screw shaft 46, and the ball nut 47 are exposed and therefore they are not hedged off from permeation of rainwater, mud, or the like from outside the vehicle. Thus, it is feared that for example, rainwater or muddy water permeates the motor 50 and the motor short-circuits and is damaged, thereby spoiling the functions of the motor 50 or the like.

If a body of the electromagnetic shock absorber and the motor 50 are covered by a cover or the like so as to prevent the above, due to the cover to be arranged outside the motor 50, an outer diameter becomes larger by a portion equivalent to the cover. Especially, if the electromagnetic shock absorber is arranged as a shock absorber for a vehicle at a part having an insufficient space which is located between an axle and a lower surface of a car body, it will be difficult to have a large outer diameter. Thus, it will be difficult to have a sufficient space between a case section outside the motor 50 and a cover which covers the outside, thereby deteriorating radiation of heat which opposes against calorification of the motor 50.

While a vehicle is traveling, the motor 50 rotates due to telescopic motion of the shock absorber and always generates heat due to an electric current which flows the coils at this time. Thus, if the heat radiation is insufficient, the motor itself increases in temperature. If the temperature rise of the motor 50 continues and the temperature exceeds temperature rating of the motor 50, an insulating coat of a conducting wire which forms a coil will undergo a chemical change or the like due to heat and therefore insulation performance will be deteriorated. It is feared that as a result, electric leakage or the like takes place and the motor itself is damaged.

If a cover or an external cylinder of the electromagnetic shock absorber is rendered thick and a space around the motor 50 is rendered wide so as to prevent the motor 50 from being subjected to damage which may arise resulting from the temperature rise, it will interfere other members such as a chassis and the electromagnetic shock absorber may not be applied to a vehicle as described above or the electromagnetic shock absorber will become heavier. This will be new harmful results.

Further, if the motor 50 is used as an independent component, the number of fastening parts, such as a bolt, a nut, or a bracket for motor, will be increased when the motor 50 is installed at the electromagnetic shock absorber body, and also fabrication processes of the electromagnetic shock absorber will be increased. This will affect productivity and production costs.

### DISCLOSURE OF THE INVENTION

An advantage of the present invention is to hasten heat radiation of a motor and to prevent the motor from being subjected to damage which may arise resulting from the temperature rise exceeding the temperature rating of the motor.

A further advantage of the present invention is to increase durability of an electromagnetic shock absorber, further to increase productivity of the electromagnetic shock absorber, and to decrease production costs of the electromagnetic shock absorber. Such advantages are achieved by a device according to claim 1.

In order to achieve the advantages described above, the electromagnetic shock absorber according to the present invention comprises: a shock absorber body which makes telescopic motion in response to an input from outside; a ball screw mechanism which is arranged at the shock absorber body, converts the telescopic motion into rotary motion, and is composed of a ball nut and a screw shaft; a motor which is provided coaxially with the shock absorber body and generates electromagnetic resistance to oppose against the rotary motion to be input into a rotary shaft of the motor; and a cylindrical member which covers the shock absorber body and the motor from outside and whose part covering the motor also serves as a motor frame.

Further, the shock absorber body has an external cylinder and an internal cylinder to be slidably inserted into the external cylinder. A cylindrical cover having the frame of the motor is coaxially connected with an upper part of the external cylinder. The external cylinder and the cover constitute the cylindrical member.

Further, the shock absorber body has the external cylinder and the internal cylinder to be slidably inserted into the external cylinder. An upper part of the external cylinder extends in such a manner that the upper part covers the motor. The frame of the motor is formed at the extended section, and the external cylinder constitutes the cylindrical member.

The rotary shaft of the motor is rotatably supported at its both ends by a pair of bearings which are installed at the external cylinder.

Therefore, according to the present invention, when the shock absorber body makes telescopic motion, the telescopic motion is converted into rotary motion by the ball screw mechanism and electromagnetic resistance to resist against the rotary motion is generated by the motor. The electromagnetic resistance becomes damping force which opposes against the telescopic motion of the shock absorber body.

Even in a case in which the electromagnetic shock absorber is used as a shock absorber of a vehicle, because the shock absorber body and the motor are covered from outside by the cylindrical member, permeation of rainwater, muddy water, or the like from outside is prevented and an internal mechanism is protected from a stepping stone from the road, garbage, dust, or the like, thereby enabling enhancement of the durability.

Further, due to generation of the electromagnetic resistance, the motor generates heat. However, in the case of the cylindrical member, the motor is not filled with the heat and radiates the heat well because the cylindrical member also serves as the motor frame. Further, it is possible to avoid the enlargement of a diameter of the shock absorber body, whereby it is also advantageous in respect of installation space.

Further, because the cylindrical member which covers the shock absorber body constitutes a part of the motor, support of the motor and installation of the motor at the shock absorber body are facilitated. Also, it is possible to reduce the number of fittings and improve workability and productivity.

### BRIEF DESCRIPTION OF THE DRAWINGS

FIG. 1 is a sectional view showing an embodiment of the present invention.
FIG. 2 is a sectional view showing another embodiment of the present invention.
FIG. 3 is a block diagram of a conventional example.

### BEST MODE FOR CARRYING OUT THE INVENTION

Description of the present invention will subsequently be given based on an embodiment shown in the drawing.

A shock absorber body 30 which constitutes an electromagnetic shock absorber according to the present invention comprises an external cylinder 23 and an internal cylinder 19 to be coaxially and slidably inserted into the external cylinder 23.

A motor 32 is arranged above the external cylinder 23, and a screw shaft 18 which constitutes a ball screw mechanism 16 is coaxially arranged in the internal cylinder 19. A ball nut 17 to be spirally engaged with the screw shaft 18 is fixed to an upper part of the internal cylinder 19. When the internal cylinder 19 makes telescopic motion with respect to the external cylinder 23, the screw shaft 18 to be spirally engaged with the ball nut 17 makes rotary motion at the position.

A shaft 6 of the motor 32 is connected with the screw shaft 18 via a planetary gear mechanism 36. Thus, it is arranged such that a rotation of the screw shaft 18 brings about a rotation of the motor 32.

In this embodiment, the motor 32 is a motor having a direct-current brush and comprises a plurality of permanent magnets 4a and 4b for generating magnetic fields, a rotor 2 to which coils 2a are wound, a commutator 3, a brush 5, a brush holder 7, a shaft 6, and the like. Further, the motor 32 comprises a cylindrical cover 1 which covers the outside of the above components.

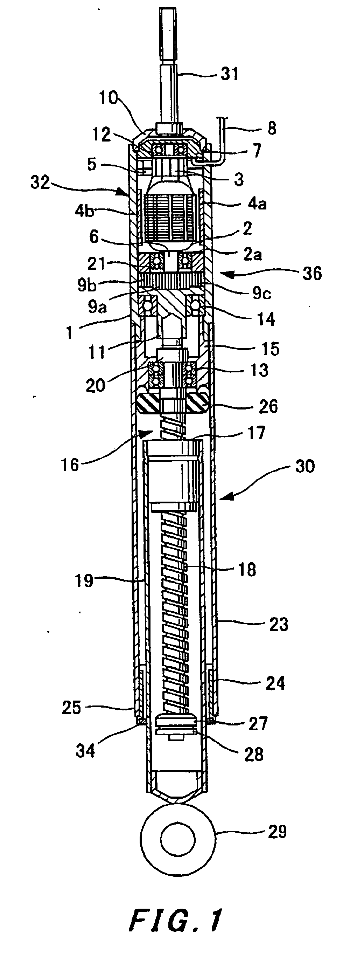

The cover 1 is coaxially fixed to an upper end of the external cylinder 23 of the shock absorber body 30. At this time, a part of the cover 1 has a role of a frame of the motor 32 as shown in FIG. 1 and the cover 1 also has a role of an external cylinder to cover a motor section of the electromagnetic shock absorber. Thus, the motor 32 does not need a case which is normally essential.

Upper and lower ends of the shaft 6 of the motor 32 are rotatably supported in the cover 1 via ball bearings 12 and 22 which are installed in the cover 1.

The plurality of coils 2a of the rotor 2 which is attached to the shaft 6 are connected to the commutator 3 installed above the shaft 6 via a plurality of conductive wires (not shown in the drawing). The commutator 3 is in contact with the brush 5 which is connected in the cover 1 through the brush holder 7 installed in a lateral direction of the commutator 3. Further, the brush 5 is connected with lead wires 8.

A cap 10 is connected to an upper end of the cover 1 and thus permeation of water and muddy water into the cover 1 is prevented. Further, a fastening shaft 31 for attaching the electromagnetic shock absorber to the car body side is provided as a projection at an upper end of the cap 10 and coaxially with the cover 1.

Further, the permanent magnets 4a and 4b are located around the rotor 2 and installed at an internal circumference of the cover 1. Thus, magnetic fields rest on the rotor 2. In this case, the cover 1 functions not only as the frame of the motor 32, but also as a yoke of a stator.

Additionally, the permanent magnets 4a and 4b are arranged in the cover 1 in such a manner that they face to each other. However, it is justifiable that the number of the arrangement is more than two as long as the permanent magnets are installed in such a manner that magnetic fields are generated.

The lead wires 8 are connected with a control circuit or the like (not shown in the drawing) or the lead wires 8 which are connected with the respective magnetic poles are directly connected with each other. It is arranged such that by connecting the coils to a closed circuit, electromagnetic torque to resist the rotations of the shaft 6 is generated.

In this case, if there is no particular need for providing the control circuit, it will be unnecessary to arrange lead wires 8 outside the cover 1. It will be sufficient if the respective magnetic poles are short-circuited in the cover 1.

In this embodiment, a case in which a motor having a direct-current brush is employed as the motor 32 is described, but a direct-current brushless motor, an alternate-current motor, or an induction motor may be employed.

Further, it will be sufficient if permanent magnets are fixed on the side of the rotor of the shaft 6 and coils are arranged at the internal circumference of the cover 1.

Next, an eye mounting bracket 29 is attached to a lower end of the internal cylinder 19 of the shock absorber body 30, and due to the eye mounting bracket 29, the internal cylinder 19 is connected on the axle side of the vehicle.

Further, the internal cylinder 19 is supported by a bush 24 (bearing member) of a rod guide 25 installed at the internal circumference of a lower end of the external cylinder 23 in such a manner that the internal cylinder 19 can freely slide with respect to the external cylinder 23. Further, it is arranged such that due to a seal 34 provided at a lower end of the rod guide 25, permeation of dust, rainwater, or the like into the shock absorber body is prevented.

Additionally, the rod guide 25 can be omitted, but it is preferable to provide the rod guide 25 for the purposes of preventing the buckling of the internal cylinder 19 and smoothly guiding the linear motion.

Further, the ball nut 17 of the ball screw mechanism 16 is installed at an upper end of the internal cylinder 19 in such a state that the ball nut 17 is in the cover in order for the internal cylinder 19 to slide with respect to the external cylinder 23, in other words, in order to convert telescopic motion into rotary motion. The screw shaft 18 to be spirally engaged with the ball nut 17 is arranged in such a manner that the screw shaft 18 goes through the shaft center of the internal cylinder 19, and the screw shaft 18 rotates at the position due to the linear motion of the internal cylinder 19.

Constitution of the ball nut 17 is not particularly shown in the drawing. However, a ball retention groove in a spiral shape is installed at an internal circumference of the ball nut 17 so that the ball retention groove fits in with a thread groove in a spiral shape of the screw shaft 18. A great number of balls are arranged at the ball retention groove and a channel which enables the communicative connection of both ends of the spiral ball retention groove is provided in the ball nut 17 so that the great number of balls can circulate. When the screw shaft 18 is spirally engaged with the ball nut 17, the balls fit into the thread groove in a spiral shape of the screw shaft 18. Due to movement of the ball nut 17 in a vertical direction, the screw shaft 18 makes rotary motion by force. At this time, the balls themselves rotate due to frictional force of the balls and the thread groove of the screw shaft 18, thereby enabling smoother motion as compared with a rack-and-pinion mechanism or the like.

A first cushion member 27 composed of rubber or the like is installed at a lower end of the screw shaft 18 through a mounting and fastening tool 28. Thus, when the internal cylinder 19 makes a stroke up to the maximum descent position which is a lower end of the screw shaft 18, the first cushion member 27 comes into contact with the ball nut 17 from the under surface and absorbs impact shock resulting from a sudden collision. Also, the first cushion member 27 is utilized as a stopper for restraining a further descent stroke of the internal cylinder 19.

Further, a second cushion member 26, which is located at the under surface of a bearing retention member 15 for retaining a ball bearing 13 to rotatably support the screw shaft 18 and which is composed of rubber or the like, is inserted into and retained at an upper internal circumference of the external cylinder 23. When the internal cylinder 19 makes a stroke up to the maximum ascent position, the second cushion member 26 comes into contact with the ball nut 17 and absorbs impact shock of the ball nut 17 resulting from a collision. Also, the second cushion member 26 is utilized as a stopper for restraining a further ascent stroke of the internal cylinder 19.

An upper end of the screw shaft 18 is rotatably supported by the ball bearing 13 and also a downward movement of the screw shaft 18 is stopped by a fastening nut 20 of the screw shaft 18.

A carrier shaft section 11 of the planetary gear mechanism 36 is inserted in and connected with an upper end of the screw shaft 18, and the carrier shaft section 11 is rotatably supported by a ball bearing 14 which is retained at the internal circumference of the cover 1. Additionally, an upper end of the screw shaft 18 is connected by spline fit-in, serration fit-in, key connection, or the like so that the screw shaft 18 does not rotate relatively to the carrier shaft section 11.

The planetary gear mechanism 36 is constituted such that sun gears 9a are engaged with the inside of a plurality of planetary gears 9b supported by the carrier shaft section 11 and ring gears 9c are engaged with the outside of the planetary gears 9b.

The ring gears 9c on the outside are fixed to the internal circumstance of the cover 1, on the other hand, the sun gears 9a are fixed to the shaft 6 of the motor 32.

Therefore, it is arranged such that when the screw shaft 18 is rotated, the planetary gears 9b of the planetary gear mechanism 36 revolve, the sun gears 9a to be engaged with the planetary gears 9b rotate, and the rotation is transferred to the shaft 6 of the motor 32. In this case, according to a gear ratio of the sun gears 9a, the planetary gears 9b, and the ring gears 9c, the rotation of the screw shaft 18 is decelerated and transmitted to the shaft 6.

Electromagnetic torque generated by the motor 32 is amplified according to the gear contact ratio and transferred to the screw shaft 18. Strength of the damping force to be generated can be adjusted by changing the gear contact ratio.

Additionally, the motor 32 and even the planetary gear mechanism 36 are installed at the cover 1 in such a manner that the motor 32 and the planetary gear mechanism 36 are housed in the cover 1.

Additionally, the planetary gear mechanism 36 is not the only means for transmitting rotary motion of the screw shaft 18 to the shaft 6. It is also acceptable to employ a reduction gear mechanism other than the planetary gear mechanism 36, or to directly connect the screw shaft 18 with the shaft 6, or to connect the screw shaft 18 with the shaft 6 via a torsion bar.

When pushing up force, vibration, or the like from the surface of a road acts on the internal cylinder 19 of the shock absorber body 30 while a vehicle is traveling, the internal cylinder 19 makes linear motion in a telescopic direction and along the external cylinder 23. The linear motion is converted into the rotary motion of the screw shaft 18 by the ball screw mechanism 16 which is composed of the ball nut 17 and the screw shaft 18.

Then, the rotary motion of the screw shaft 18 is transmitted to the shaft 6 because the screw shaft 18 is connected with the shaft 6 via the planetary gear mechanism 36. When the shaft 6 of the motor 32 makes rotary motion, the rotor 2 which has the coils 2a and is installed at the shaft 6 rotates and the coils 2a go across magnetic fields of the permanent magnets 4a and 4b, whereby induced electromotive force is generated. Based on the generation, torque which resists against the rotations of the shaft 6 is generated due to electromagnetic force of the motor 32.

Because reverse torque resulting from the electromagnetic force of the motor 32 restrains the rotary motion of the screw shaft 18, the reverse torque operates as damping force which restrains the linear motion of the internal cylinder 19 in a telescopic direction and along the external cylinder 23. Thus, impact energy from the surface of a road is absorbed and eased, a vehicle is made more comfortable to drive, and driveability is improved.

Due to the series of operations described above, functions of the electromagnetic shock absorber can be demonstrated, but a load, such as pushing up force or vibration, from the surface of a road is applied to the internal cylinder 19 and the internal cylinder 19 always makes telescopic motion while a vehicle is traveling. The telescopic motion is converted into the rotary motion of the screw shaft 18 by the ball screw mechanism 16 and transmitted to the shaft 6 of the motor 32. However, the motor 32 generates heat because electric currents resulting from the induced electromotive force often flow the coils of the motor 32. Thus, although the motor 32 itself rise in temperature, the motor 32 is not filled with heat because the cover 1 serves both as the frame and as the case of the motor 32 and another cover does not cover the outside of the motor 32 which is a completed product.

Further, if the electromagnetic shock absorber is applied to a vehicle, it is possible to effectively radiate heat because the cover 1 exposes itself to the wind while a vehicle is traveling.

Due to the above, it is possible to prevent the motor itself 32 from increasing in temperature, prevent conductive wires which form coils of the motor 32 from being subjected to deterioration which may arise resulting from heat of the insulating coat, prevent electric leakage or the like of the motor 32, and increase the durability.

Further, because the cover 1 constitutes a part of a stator or the like of the motor 32, unlike a case in which the motor 32 is an independent component, it is not necessary to have fasteners for installing the motor at the shock absorber body 30, such as a bracket, a bolt, or a nut, whereby a small number of components meet the requirements. This facilitates fabrication and processing and therefore productivity can be improved and production costs can be held down.

Further, due to the cover 1 which covers the outside of the motor 32, it is possible to prevent rainwater, muddy water, or the like from permeating the inside of the motor 32, thereby enabling the protection of the motor 32.

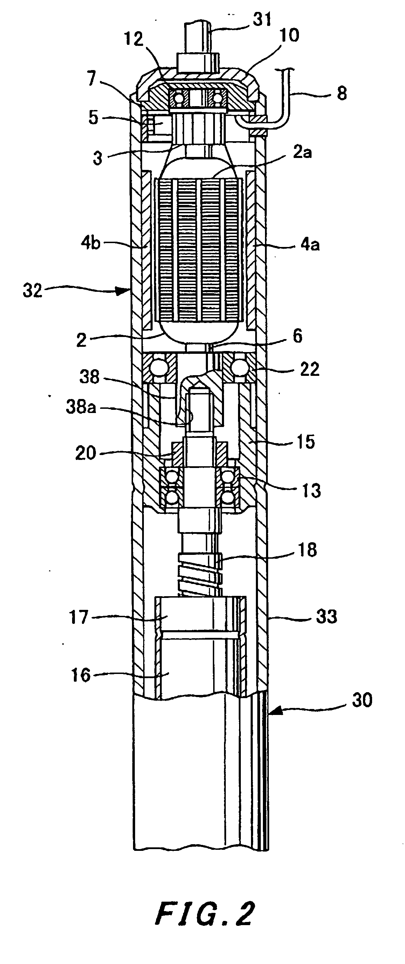

A second embodiment will subsequently be described with reference to FIG. 2.

In this embodiment, the shock absorber body 30 comprises an external cylinder 33 which extends up to the motor 32.

In the external cylinder 33 similarly to the cover 1, a frame, which covers the rotor and stator of the motor 32 from the outside, and components, which are essential for a yoke, are formed in one united body. The permanent magnets 4a and 4b are directly installed at the internal circumference of the external cylinder 33 so as to form the stator of the motor 32.

The shaft 6 of the motor 32 is rotatably supported by the ball bearing 22 which is arranged above the bearing retention member 15 installed inside the external cylinder 33. The shaft 6 goes through the ball bearing 22 and projects downward, and a tip of the screw shaft 18 is inserted into an axis hole 38a of a projected section 38. The shaft 6 is connected with the screw shaft 18, for example by spline fit-in, serration fit-in, or key connection, in such a manner that the shaft 6 and the screw shaft 18 do not rotate relatively to each other.

Therefore, in this embodiment, the screw shaft 18 and the shaft 6 of the motor 32 are directly connected without intervention of the planetary gear mechanism. Such constitution is effective in shortening the total length of the electromagnetic shock absorber.

Other constitution is same as that of the first embodiment and the same reference symbols are attached to the same components.

Therefore, in this embodiment, the outside of the motor 32 is covered by the extended external cylinder 33 of the shock absorber body 30 and thus the motor 32 is protected.

The frame of the motor 32 and the components essential for a yoke are formed in one united body at a part of the external cylinder 33 which covers the motor 32 from the outside. Therefore, it facilitates assembly of the motor into the electromagnetic shock absorber and it also improves the workability and productivity.

The present invention is not restricted to the embodiments described above. It is obvious that the present invention includes various improvement and modification which can be made by a person skilled in the art within a scope of technical ideas given in the following claims.

### INDUSTRIAL APPLICABILITY

The electromagnetic shock absorber according to the present invention can be applied as a shock absorber for a vehicle.

## Claims

1. An electromagnetic shock absorber comprising:
a shock absorber body (30) which makes telescopic motion in response to an input from outside;
a ball screw mechanism (16), which is arranged at the shock absorber body (30),
converts the telescopic motion into rotary motion, and is composed of a ball nut (17) and a screw shaft (18);
a motor (32) which is provided coaxially with the shock absorber body (30) and
generates electromagnetic resistance to oppose against the rotary motion to be input into a rotary shaft (6) of the motor (32);
a cylindrical member which covers the shock absorber body (30) and the motor (32) from outside, and whose part to cover the motor also serves as a motor frame;
the shock absorber body comprises an external cylinder (23) and an internal cylinder (19) slidably inserted into the external cylinder (23); and
the ball nut (17) is fixed to an upper part of the internal cylinder (19) and the screw shaft (18) spirally engaged with the ball nut (17) is connected with the rotary shaft (6) of the motor (32),
**characterized in that**
an upper part of the external cylinder (23) which forms the cylindrical member extends so as to cover the motor (32), and the frame of the motor (32) is formed at an extended part of the external cylinder (23) and permanent magnets (4a, 4b) are installed at inner surfaces of the extended part of the external cylinder (23) as a stator of the motor (32),
an upper end of the screw shaft (18) is rotatably supported via a bearing (13) installed inside the external cylinder (23),
a first cushion member (27) is installed at a lower end of the screw shaft (18), which contacts with a lower end of the ball nut (17) at the full downward stroke position of the internal cylinder (19),
a second cushion member (26) is installed at a lower side of the bearing (13), which contacts with an upper end of the ball nut (17) at the full upward stroke position of the internal cylinder (19), and
the first and second cushion members (26, 27) are made by rubber.

2. The electromagnetic shock absorber according to claim 1, **characterized in that** the rotary shaft (6) of the motor (32) is rotatably supported at its both ends by a pair of bearings (12, 22) installed at the external cylinder (19).

3. The electromagnetic shock absorber according to claim 1, **characterized in that** the screw shaft (18) and the rotary shaft (6) are connected through a planetary gear mechanism (36) which decelerates and transmits a rotation of the screw shaft (18) to the rotary shaft (6).

## Patentansprüche

1. Elektromagnetischer Stoßdämpfer, der umfasst:
einen Stoßdämpferkörper (30), der in Reaktion auf Eingabe von außen Teleskopbewegung durchführt;
einen Kugelspindelmechanismus (16), der an dem Stoßdämpferkörper (30) angeordnet ist, die Teleskopbewegung in Drehbewegung umwandelt und aus einer Kugelmutter (17) und einer Schraubenwelle (18) besteht;
einen Motor (32), der koaxial zu dem Stoßdämpferkörper (30) vorhanden ist und elektromagnetischen Widerstand erzeugt, um der Drehbewegung entgegenzuwirken, die in die Drehwelle (6) des Motors (32) eingegeben wird;
ein zylindrisches Element, das den Stoßdämpferkörper (30) und den Motor (32) von außen abdeckt und dessen Teil, der den Motor abdeckt, auch als ein Motorrahmen dient;
wobei der Stoßdämpferkörper einen äußeren Zylinder (23) und einen verschiebbar in den äußeren Zylinder (23) eingeführten inneren Zylinder (19) umfasst; und
die Kugelmutter (17) an einem oberen Teil des inneren Zylinders (19) befestigt ist und die Schraubenwelle (18), die in Spiraleingriff mit der Kugelmutter (17) ist, mit der Drehwelle (6) des Motors (32) verbunden ist,
**dadurch gekennzeichnet, dass**
ein oberer Teil des äußeren Zylinders (23), der das zylindrische Element bildet, sich so erstreckt, dass er den Motor (32) abdeckt, der Rahmen des Motors (32) an einem verlängerten Teil des äußeren Zylinders (32) ausgebildet ist und Permanentmagneten (4a, 4b) an Innenflächen des verlängerten Teils des äußeren Zylinders (23) als ein Ständer des Motors (32) installiert sind,
ein oberes Ende der Schraubenwelle (18) über ein Lager (13), das im Inneren des äuβeren Zylinders (23) installiert ist, drehbar getragen wird,
ein erstes Dämpfelement (27) an einem unteren Ende der Schraubenwelle (18) installiert ist, das mit einem unteren Ende der Kugelmutter (17) an der untersten Hubposition des inneren Zylinders (19) in Kontakt kommt,
ein zweites Dämpfelement (26) an einer Unterseite des Lagers (13) installiert ist, das mit einem oberen Ende der Kugelmutter (17) an der obersten Hubposition des inneren Zylinders (19) in Kontakt kommt, und
das erste und das zweite Dämpfelement aus Gummi bestehen.

2. Elektromagnetischer Stoßdämpfer nach Anspruch 1, **dadurch gekennzeichnet, dass** die Drehwelle (6) des Motors (32) an ihren beiden Enden von einem Paar Lager (12, 22) drehbar getragen wird, die an dem äußeren Zylinder (19) installiert sind.

3. Elektromagnetischer Stoßdämpfer nach Anspruch 1, **dadurch gekennzeichnet, dass** die Schraubenwelle (18) und die Drehwelle (6) über einen Planetenradmechanismus (36) verbunden sind, der eine Drehung der Schraubenwelle (18) abbremst und auf die Drehwelle (6) überträgt.

## Revendications

1. Amortisseur électromagnétique comportant :
un corps d'amortisseur (30) qui effectue un mouvement télescopique en réponse à une entrée de l'extérieur ;
un mécanisme de vis à billes (16), disposé au niveau du corps d'amortisseur (30), convertit le mouvement télescopique en mouvement de rotation, et est constitué d'un écrou à boule (17) et d'un arbre à vis (18) ;
un moteur (32), placé en position coaxiale par rapport au corps d'amortisseur (30), et qui génère une résistance électromagnétique opposée au mouvement de rotation qui doit être appliqué à un arbre rotatif (6) du moteur (32) ;
un organe cylindrique, qui couvre le corps d'amortisseur (30) et le moteur (32), depuis l'extérieur, et dont une partie qui couvre le moteur joue également le rôle du bâti de moteur ;
le corps d'amortisseur comporte un cylindre externe (23) et un cylindre interne (19) insérés pour pouvoir glisser dans le cylindre externe (23) ; et
l'écrou à boule (17) est fixé à une partie supérieure du cylindre interne (19) et l'arbre à vis (18), enclenché selon un mouvement spiralé avec l'écrou à boule (17), est relié à l'arbre de rotation (6) du moteur (32),
**caractérisé en ce que**
une partie supérieure du cylindre externe (23), qui forme l'organe cylindrique, se prolonge afin de couvrir le moteur (32), et le bâti du moteur (32) est formé sur une partie de prolongement du cylindre externe (23) et des aimants permanents (4a, 4b) sont installés sur des surfaces intérieures de la partie de prolongement du cylindre externe (23), à titre de stator du moteur (32),
une extrémité supérieure de l'arbre à vis (18) est soutenue en rotation via un palier (13) installé à l'intérieur du cylindre externe (23),
un premier organe de coussinet (27) est installé au niveau d'une extrémité inférieure de l'arbre à vis (18), qui se trouve au contact d'une extrémité inférieure de l'écrou à boule (17) dans la position de course la plus basse du cylindre interne (19),
un second organe de coussinet (26) est installé au niveau d'une extrémité inférieure du palier (13), qui se trouve au contact d'une extrémité supérieure de l'écrou à boule (17) dans la position de course la plus haute du cylindre interne (19), et
les premier et second organes de coussinets (26, 27) sont constitués de caoutchouc.

2. Amortisseur électromagnétique selon la revendication 1, **caractérisé en ce que** l'arbre de rotation (6) du moteur (32) est soutenu en rotation à ses deux extrémités par une paire de paliers (12, 22) installée au niveau du cylindre externe (19).

3. Amortisseur électromagnétique selon la revendication 1, **caractérisé en ce que** l'arbre à vis (18) et l'arbre de rotation (6) sont reliés par un mécanisme d'engrenage planétaire (36) qui décélère et transmet une rotation de l'arbre à vis (18) à l'arbre de rotation (6).
